# EUROPEAN PATENT SPECIFICATION

(11) **EP 4 315 979 B1**
(45) Date of publication and mention of the grant of the patent: **07.05.2025**
(21) Application number: 22718371.2
(22) Date of filing: 28.03.2022
(51) Int. Cl.: H04W 36/02, H04W 36/08, H04W 36/18, H04W 4/06

(54) **HANDOVER WITH AN ACTIVE MULTI-CAST BROADCAST SESSION**
WEITERREICHEN MIT EINER AKTIVEN MULTICAST-RUNDFUNKSITZUNG
TRANSFERT INTERCELLULAIRE AVEC UNE SESSION DE DIFFUSION ET DE MULTIDIFFUSION ACTIVE

(30) Priority: 30.03.2021 US 202163168124 P
(43) Date of publication of application: 07.02.2024
(73) Proprietor: InterDigital Patent Holdings, Inc., Wilmington, DE 19809 (US)
(72) Inventor: TEYEB, Oumer, Montreal, Quebec, H3C 0X6 (CA); NARAYANAN THANGARAJ, Yugeswar, Deenoo, Chalfont, PA 18914 (US)
(74) Representative: AWA Sweden AB
(86) International application number: PCT/US2022/022173
(87) International publication number: WO 2022/212274

(56) References cited:
- CATT ET AL: "Open Issues on Mobility with Service Continuity", vol. RAN WG2, no. Online; 20210125 - 20210205, 15 January 2021 (2021-01-15), XP051973303, Retrieved from the Internet <URL:https://ftp.3gpp.org/tsg_ran/WG2_RL2/TSGR2_113-e/Docs/R2-2100085.zip R2-2100085 Open Issues on Mobility with Service Continuity.docx> [retrieved on 20210115]
- VIVO: "MBS service continuity for RRC Connected UE", vol. RAN WG2, no. electronic; 20210125 - 20210205, 15 January 2021 (2021-01-15), XP051973932, Retrieved from the Internet <URL:https://ftp.3gpp.org/tsg_ran/WG2_RL2/TSGR2_113-e/Docs/R2-2100835.zip R2-2100835 MBS service continuity for RRC Connected UE.doc> [retrieved on 20210115]
- TCL COMMUNICATION LTD: "Discussion on support of reliable and low-latency NR multicast mobility", vol. RAN WG3, no. Online; 20201102 - 20201113, 23 October 2020 (2020-10-23), XP051945941, Retrieved from the Internet <URL:https://ftp.3gpp.org/tsg_ran/WG3_Iu/TSGR3_110-e/Docs/R3-206556.zip R3-206556.docx> [retrieved on 20201023]
- QUALCOMM INC: "NR Multicast Radio Bearer Architecture aspects", vol. RAN WG2, no. E-Meeting; 20200817 - 20200828, 7 August 2020 (2020-08-07), XP051911700, Retrieved from the Internet <URL:https://ftp.3gpp.org/tsg_ran/WG2_RL2/TSGR2_111-e/Docs/R2-2006793.zip R2-2006793_NR Multicast MRB Architecture aspects_v3.doc> [retrieved on 20200807]
- MEDIATEK INC: "HO for NR MBS", vol. RAN WG2, no. E-Meeting; 20210125 - 20210205, 15 January 2021 (2021-01-15), XP051974138, Retrieved from the Internet <URL:https://ftp.3gpp.org/tsg_ran/WG2_RL2/TSGR2_113-e/Docs/R2-2101144.zip R2-2101144.docx> [retrieved on 20210115]
- VIVO: "Mobility for NR MBS", vol. RAN WG2, no. electronic; 20220117 - 20220125, 11 January 2022 (2022-01-11), XP052094359, Retrieved from the Internet <URL:https://ftp.3gpp.org/tsg_ran/WG2_RL2/TSGR2_116bis-e/Docs/R2-2201258.zip R2-2201258 Mobility for NR MBS.doc> [retrieved on 20220111]
- VIVO: "CHO and DAPS for NR MBS", vol. RAN WG2, no. electronic; 20211101 - 20211112, 22 October 2021 (2021-10-22), XP052066449, Retrieved from the Internet <URL:https://ftp.3gpp.org/tsg_ran/WG2_RL2/TSGR2_116-e/Docs/R2-2109996.zip R2-2109996 CHO and DAPS for NR MBS.doc> [retrieved on 20211022]

## Description

### Technical Field

The present disclosure relates to an apparatus and a method for handover with an active multicast broadcast session.

### BACKGROUND

Mobile communications using wireless communication continue to evolve. A fifth generation may be referred to as 5G. A previous (legacy) generation of mobile communication may be, for example, fourth generation (4G) long term evolution (LTE).

Publication "Open Issues on Mobility with Service Continuity", 3GPP DRAFT; R2-2100085; vol. RAN WG2, no. Online; 20210125 -20210205; 15 January 2021 describes lossless handover for MBS-MBS mobility. Further, publication "MBS service continuity for RRC Connected UE", 3GPP DRAFT; R2-2100835; vol. RAN WG2, no. electronic; 20210125 -20210205; 15 January 2021 also discuss lossless handover.

### SUMMARY

The invention is set out in the independent claims 1 and 9. Further embodiments are set out in the dependent claims.

### BRIEF DESCRIPTION OF THE DRAWINGS

FIG. 1A is a system diagram illustrating an example communications system in which one or more disclosed embodiments may be implemented.
FIG. 1B is a system diagram illustrating an example wireless transmit/receive unit (WTRU) that may be used within the communications system illustrated in FIG. 1A according to an embodiment.
FIG. 1C is a system diagram illustrating an example radio access network (RAN) and an example core network (CN) that may be used within the communications system illustrated in FIG. 1A according to an embodiment.
FIG. 1D is a system diagram illustrating a further example RAN and a further example CN that may be used within the communications system illustrated in FIG. 1A according to an embodiment.
FIG. 2 is a diagram illustrating an example PCDP entity.
FIG. 3 is a diagram illustrating an example handover process.
FIG. 4 is a diagram illustrating an example handover process.
FIG. 5 is a diagram illustrating an example handover process.
FIG. 6 is a diagram illustrating an example associated with handover.

### DETAILED DESCRIPTION

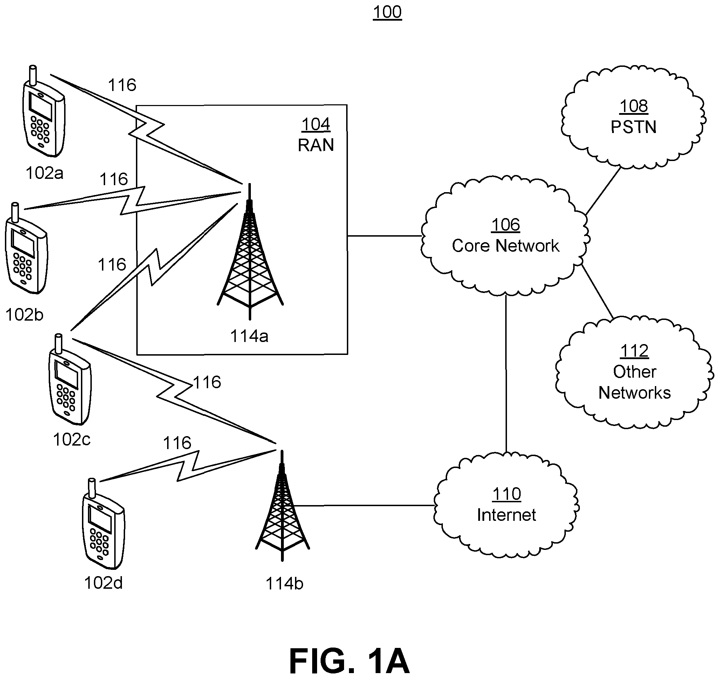

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c, and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B (eNB), a Home Node B, a Home eNode B, a gNode B (gNB), a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, e.g., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (e.g., Wireless Fidelity (WiFi), IEEE 802.16 (e.g., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

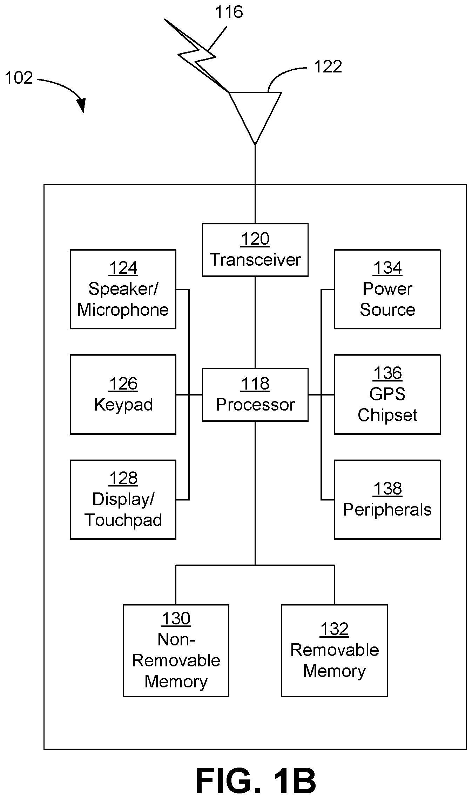

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable locationdetermination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

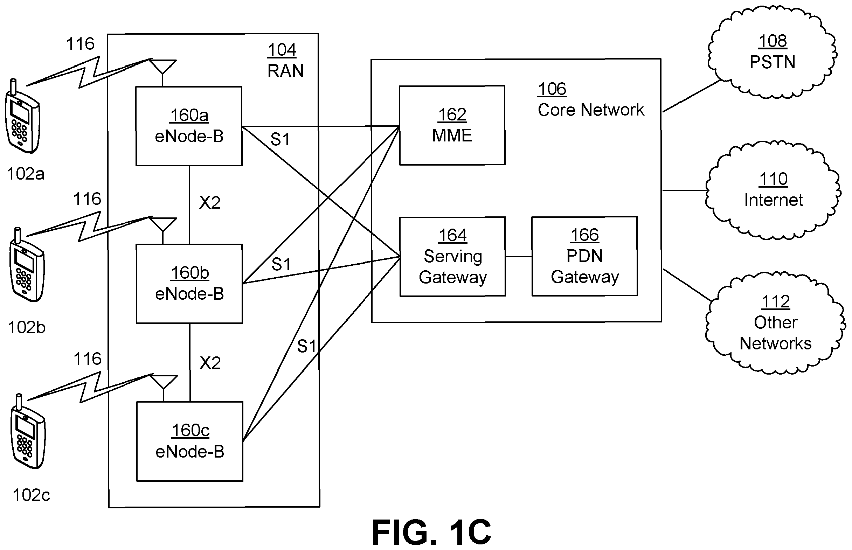

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements is depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during intereNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

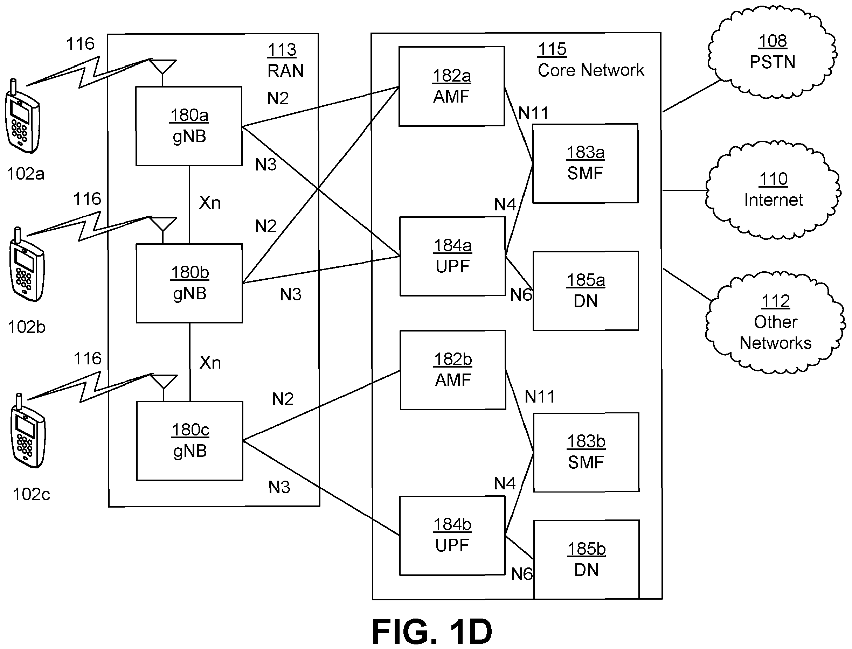

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernetbased, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

Systems, methods, and instrumentalities are described herein for a wireless transmit-receive unit (WTRU) configured to perform a handover, e.g., associated with an active multi-cast broadcast session. The WTRU may be configured to send a packet data convergence protocol (PDCP) status report after handover, based on receiving an out of sequence packet for a multicast radio bearer (MRB). The WTRU may be configured to temporarily suspend in-order delivery operation of an MRB's PDCP after handover and forward out of order packets to higher layers. The WTRU may be configured to keep a connection to a source cell and receive MRB data (e.g., data packets) from both the source and target cells (e.g., until there is no gap between the packets received from the source and target cells). If the WTRU determines that there is no gap between packets (e.g., based on data received from the source cell or the target cell), the WTRU may detach from the source. The WTRU may be configured to keep connection to source and receive MRB data from both the source and target, until the WTRU determines in-order reception of a packet with a certain SN, and, the WTRU may detach from the source (e.g., based on the determination). The WTRU may be configured to keep a connection to the source and receive MRB data from both the source and target, e.g., until condition(s) related to the source's or/and target's radio quality/quantity are fulfilled (or not fulfilled), and thereafter detach from the source. The WTRU may be configured to keep a connection to the source cell and receive MRB data from both the source and target cells, until certain conditions are fulfilled (or not fulfilled). During this time, the WTRU may perform the MRB reception from the source and/or target cells without lower layer automatic repeat request (ARQ).

A WTRU may be configured for multicast broadcast service (MBS) and may have an active MRB. The WTRU may perform a handover from a source node/cell to a target node/cell. The WTRU may detach (e.g., disconnect) from the source cell. The WTRU may execute the handover toward the target (e.g., getting uplink (UL) synch, starting UL/downlink(DL) transmission towards the target, etc.) and may start receiving data from the target. If a received packet (e.g., the first received packet) for the MRB from the target is out of sequence (e.g. with a gap between packets, for example with a PDCP sequence number (SN) greater than an expected PDCP SN, e.g., at a receiver window of the MRB's PDCP entity), the WTRU may send a PDCP status report to the target cell. The PDCP status report may indicate missing packet(s) (e.g. indicating an (e.g., current) expected PDCP SN at the target, and/or any out of sequence packet(s) that are waiting at the receiver buffer).

A WTRU may be configured for MBS and may have an active MRB. The WTRU may perform a handover from a source node/cell to a target node/cell. The WTRU may detach from the source. The WTRU may execute the handover towards the target (e.g., getting UL synch, starting UL/DL transmission towards the target, etc.). The WTRU may start receiving data from the target cell. The WTRU may suspend (e.g., temporarily) in-order delivery for the MRB's PDCP receiver, e.g., if in-order delivery for the MRB's PDCP receiver is configured. Suspending (e.g., temporarily) in-order delivery for the MRB's PDCP receiver may include performing one or more of the following: the WTRU may forward a first received packet for the MRB from the target, e.g., to upper layers (e.g., even if it was received out of order); the WTRU may update (e.g., reset) the PDCP receive window parameters (e.g., setting an expected PDCP SN to be equal to the SN of the first received packet from the target + 1); or the WTRU may revert the MRB's PDCP receiver operation to in-order delivery mode.

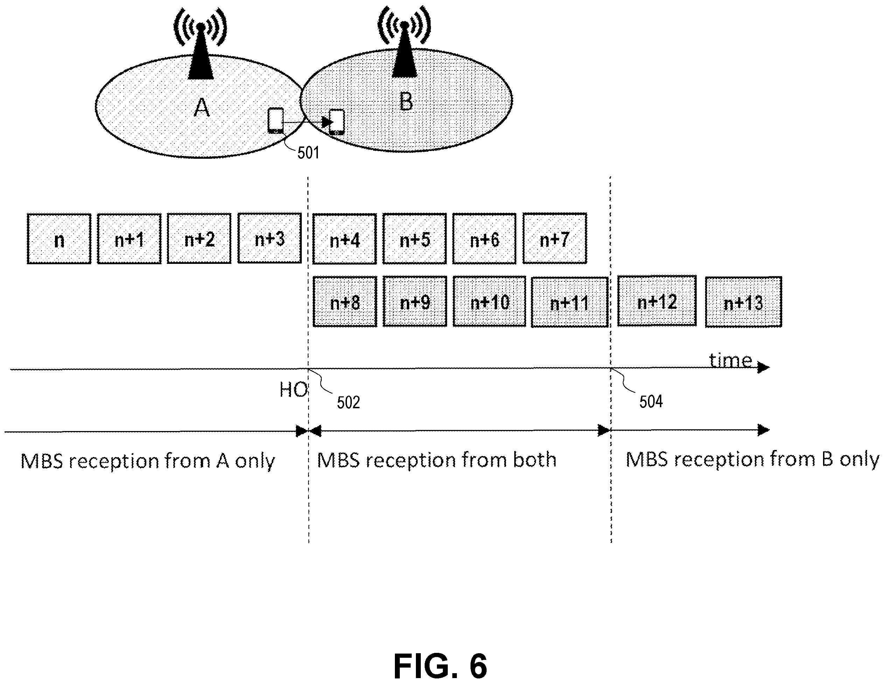

A WTRU (e.g., 501 in FIG. 6) may be configured for MBS and may have an active MRB. The WTRU may perform a handover (e.g., at time 502 in FIG. 6) from a source node/cell (e.g., A in FIG. 6) to a target node/cell (e.g., B in FIG. 6) and may perform one or more of the following. The WTRU may execute the handover towards the target (e.g., getting UL synch, starting UL/DL transmission towards the target, etc.) and may monitor for data from the target cell and/or receive data from the target (e.g., receiving packets with SNs n+8, n+9, n+10, and n+11 after time 502, as shown in FIG. 6). The WTRU may refrain from detaching/disconnecting from the source and may continue monitoring for data from the source cell and/or receiving data, e.g., for the MRB, from the source cell (e.g., receiving packets with SNs n+4, n+5, n+6, and n+7 after time 502, as shown in FIG. 6 The WTRU may keep receiving data from the source, e.g., may stop receiving data from the source if there is no gap between the packets received from the source and the target (e.g., receiving packets from A until time 504, which is when there is no gap between SNs n through n+7 from A and SNs n+8 through n+11 from B, as shown in FIG. 6). In examples, there is no gap between the packets received from the source and the target if the SN of the packet with a largest SN received from the source is greater than or equal to the SN of the packet with a smallest SN received from the target) The WTRU may disconnect/detach from the source (e.g., upon determining there is no such gap, such as at time 504 in FIG. 6), for example stop monitoring for data from the source cell and/or stop receiving data from the source cell and/or release a resource associated with the source.

A WTRU may be configured for multicast broadcast service (MBS) and may have an active Multicast Radio Bearer (MRB). The WTRU may perform a handover from a source node/cell to a target node/cell. The WTRU may perform one or more of the following. The WTRU may receive configuration information from a network (e.g., a source network) (e.g., a configuration in a handover (HO) command). The configuration information may include one or more source cell disconnect condition(s) related to one or more of the following: a PDCP SN; a time duration information; or condition(s)/threshold(s) related to the signal level(s) (e.g. RSRP, RSRQ, RSNI, etc.) towards the source cell and/or the target cell, or the HARQ failure/success rate(s) or retransmission counts of the MRB(s) towards the source cell and/or the target cell. The WTRU may execute the handover towards the target (e.g., getting UL synch, starting UL/DL transmission towards the target, etc.) and may monitor for data from the target cell and/or receive data from the target. The WTRU may refrain from detaching from the source and may continue monitoring for data from the source cell and/or receiving data, e.g., for the MRB, from the source. The WTRU may detach from the source node/cell (e.g., stop monitoring for data from the source cell and/or stop receiving data from the source cell and/or releasing a resource associated with the source) and may stop UL/DL transmission/reception towards the target, e.g., if one or more of the following happens: an in-order reception of DL packets for the concerned MRB(s) has reached the PDCP SN indicated in the handover (HO) command; a time duration (e.g., the time duration specified in the HO command) has elapsed; measured signal level(s) towards the source cell are below a threshold (e.g., a threshold specified in the HO command); measured signal level(s) towards the target cell are above a threshold (e.g., a threshold specified in the HO command); HARQ failure rate(s) and/or retransmission(s) towards the source are above a threshold (e.g., a threshold specified in the HO command); and/or HARQ failure rate(s) and/or retransmission(s) towards the source cell are below a threshold (e.g., a threshold specified in the HO command).

Reference to a timer herein may refer to a time, a time period, tracking the time, tracking the period of time, etc. Reference to a timer expiration herein may refer to determining that the time has occurred or that the period of time has expired.

Herein, network may refer to one or more gNBs which in turn may be associated with one or more Transmission/Reception Points (TRPs), or to any other node in the radio access network.

Multimedia broadcast multicast system (MBMS) may provide services. MBMS services may be delivered over wireless, e.g., according to a number of methods, including via unicast cellular transmissions (UC), Multicast-Broadcast Single Frequency Network (MBSFN) and/or Single Cell Point To Multipoint (SC-PTM).

SC-PTM may support broadcast/multicast services over a single cell. A broadcast/multicast area may be adjusted, e.g., dynamically, such as cell by cell according to users' distribution. SC-PTM may transfer the broadcast/multicast services using a downlink shared channel (e.g., a PDSCH, such as in a PDSCH in LTE). SC-PTM may be scheduled, e.g., using a common RNTI (e.g. a Group-RNTI) for a group of users. The SC-PTM scheduling may be agile and radio resources may be assigned in time and/or frequency domain by PDCCH, e.g., dynamically, such as based on real time traffic load TTI by TTI. SC-PTM may be suitable for scenarios, such as where broadcast/ multicast service may be expected to be delivered to a limited number of cells, e.g., due to user interests and multiple concerned cells (e.g., the limited number of cells) may dynamically change due to user movement. SC-PTM may allow efficient radio utilization and/or flexible deployment of a number of applications, e.g. critical communications, traffic information for cars and on-demand TV services, etc.

MBSFN may support arranging transmissions from different cells to be identical and aligned in time so that the transmissions may appear as a single transmission, e.g., from a WTRU's perspective. A notion of MBSFN synchronization areas may be defined, e.g., in order to enable time synchronization among different cells (e.g., eNBs),. An MBSFN area may include a group of cells within an MBSFN synchronization area of a network. The group of cells may be coordinated to achieve an MBSFN transmission. MBMS architecture may define one or more logical entities to perform network functions, e.g., those applicable for the MBMS transmission. An MCE (multi-cell/multi-cast coordination entity) may perform admission control, may decide whether to use SC-PTM or MBSFN, and/or may decide whether to perform suspension and/or resumption for MBMS services etc. An MBMS gateway (MBMS-GW) may perform session control signaling and may forward the MBMS user data to cells (e.g., eNBs), e.g., via IP multicasting.

MBMS may support unicast, SC-PTM, and/or MBSFN transmissions. In some examples, frequency domain resource allocation may not be supported, ,e g., if an MBMS transmission takes up a whole bandwidth (BW). MBMS resource allocation may be semi-static, in some examples. A WTRU may acquire MBMS information, e.g., via sequential reception of configuration and/or scheduling information (e.g., first on a SIB2, then a SIB13, then on a multicast control channel (MCCH), and on a multipoint traffic channel (MTCH)).

MBMS may be supported, e.g., in New Radio (NR). MBMS may be referred to as MBS (multicast and broadcast services). The terms MBMS and MBS are used interchangeably herein.

Transmission mode may be used for configured services, e.g., a configured MBS service. Transmission modes described herein are not limiting in scope or applicability to similar wireless delivery methods. References to a transmission mode herein may include transmissions methods, such as unicast, multicast (e.g., SC-PTM) and broadcast (e.g., SFN), mixed-mode (e.g., a WTRU may receive both unicast and at least one of multicast or broadcast). Such references are not limiting in scope or applicability to similar wireless delivery methods. A receive-only mode (ROM) may be a case of non-unicast modes. A sidelink interface, e.g., for a direct WTRU-to-WTRU communication, may be a case of a transmission mode. A transmission mode may be used for delivery of services with different QoS, e.g. eMBB, URLLC and/or MBS services. A transmission mode may be used for delivery of services to one (e.g., unicast) or multiple receivers (e.g., multicast, groupcast, and/or broadcast). Examples of services to multiple users may include V2x services (e.g., groupcast), and/or MBS services (e.g., multicast, broadcast). MBS mode or MBS transmission mode may be used to refer to a WTRU transmission mode herein.

Delivery of MBS service may be implemented. A WTRU may be configured for transmission of MBMS data services. Configuration aspects herein are not limiting in scope or applicability to similar delivery methods for MBS data and/or control information.

A WTRU may be configured to operate with a given transmission mode to exchange MBS-related data. The WTRU may have configuration aspects for delivery of MBS services. In examples, the WTRU may have a configuration aspect of mapping of data (or signaling) bearers for configured transmission method(s) to exchange MBS-related data, e.g., the L2 bearer configuration for MBS. For example, a WTRU may be configured for mixed-mode transmissions (e.g., unicast and multicast) with the delivery of MBS data performed using (e.g. only using) multicast (and/or broadcast) transmissions and other services being transmitted over unicast (e.g., eMBB, URLLC). For example, a WTRU may be configured for mixed-mode transmissions (e.g., unicast and multicast) with the delivery of MBS data performed using unicast (e.g., which is also referred to as Point-to-Point (PTP) transmission/mode) and/or multicast transmissions (e.g., which is also referred to as PTM) transmission/mode), e.g., irrespective of whether the WTRU is being active with other services using unicast transmissions (e.g., eMBB, URLLC).

MBMS may be used and/deployed, e.g., in NR. MBMS may be used and/or deployed to support V2X , sidelink and/or public safety. For example, MBMS may be able to distribute information in a resource efficient way to large numbers of Ues supporting V2X application. MBMS may be used and/or deployed to support loT (e.g., NB loT and eMTC) devices (e.g. for software updates), and/or smart grids/utilities. MBMS may be used and/or deployed to support TV Video and Radio services (e.g., in 5G), such as linear TV, Live, smart TV, managed and OTT content distribution, and/or radio services. In examples, video distribution may be supported, e.g., when multiple users are concurrently watching the same live streaming. Large peaks in concurrent consumption of OTT services (e.g., via unicast media streams) may be supported.

Immersive 6DoF volumetric streaming may be supported. Immersive 6DoF volumetric streaming may be much larger than flat, or even 360-degree videos. MBMS may be used and/or deployed to support push services (e.g. advertisements and weather broadcast). MBMS may be used and/or deployed to support ethernet broadcast/multicast for factory automation. MBMS may be used and/or deployed to support Xtended reality and/or group gaming.

Enablers may be supported in a radio access technology (e.g, in NR). One or more of the following enablers maybe supported in a radio access technology (e.g., in NR).

Service switching between PTP, point to multipoint (PTM), and mixed mode operation may be supported. A change in service may be triggered due to one or more of the following reasons. A change in service may be triggered due to WTRU mobility. In examples, mode switch may trigger a change in service. Mode switch may include one or more of following scenarios: PTP -> PTP, PTP -> PTM, PTP -> PTM+ PTP, PTM -> PTP, PTM -> PTM, PTM -> PTM+PTP, PTM + PTP -> PTP, PTM + PTP -> PTM, or PTM + PTP -> PTM+PTP. In examples, handover may trigger a change in service. Handover may include one or more of following scenarios: intra-eNB/intra-MBS area inter-cell mobility; inter-eNB/intra-MBS area inter-cell mobility; inter-MBS area mobility; inter-RAT mobility with change of transmission mode; or inter-RAT mobility without change of transmission mode. The above handover scenarios may be with or without service continuity, lossy or lossless.

In examples, service continuity for IDLE/INACTIVE WTRUs may be supported by a radio access technology (e.g., NR). A change in service may be triggered due to user activity. In examples, users may interact with a playback function and may have some control over the media stream. In examples, end user may interact with live and/or shared content, e.g., by means of Uplink channel to increase user engagement and monetization possibility. End user interactions may be video distribution, advertising and/or public safety use cases.

A change in service may be triggered due to WTRU density. In examples, changes in the number of users acquiring and/or receiving a MBS service, e.g. a threshold may be met whereby system efficiency may be increased by changing MBS transmission mode. In examples, WTRU density for V2X proximity/WTRU range within an area may trigger a change of service.

A change in service may be triggered due to a link condition. In examples, the quality may become lower for a first transmission mode than for a second transmission mode, e.g., given different characteristics for resources between different transmission modes for a WTRU (e.g. multicast and unicast transmissions for the WTRU).

Dynamic control of transmission area and/or transmission resources may be supported. Dynamic control of transmission resources and/or delivery areas may be due to by at least one of the following reasons: (i) regional TV/Radio services occurring at certain times of the day; (ii) fluctuation and/or variation in on-demand MBS services, e.g., in services with support for uplink data or and/or in terms of support for higher reliability; or (iii) target area for group communication and/or live video is around a specific place or triggered by an event. Such area might change due to mobility of interested users. A change in MBS area may be slower than adjusting resources between unicast (UC) service and/or multicast broadcast (MB) service and/or broadcast (BC) service.

Reliability of the transmission may be supported. MBS service may support application level retransmissions. There is a tradeoff between the cost to spectrum efficiency due to the reliability and efficiency offered by application level methods. Different MBS services might have different latency, efficiency and/or reliability requirements. MBS service may be provided in high speed environments (e.g., to address service degradation with doppler that may occur).

MBS service's reliability and/or latency in power grid distribution (e.g., a power grid distribution with a delay of 5ms and/or packet error rate of 10-6) may be considered. MBS service's reliability and/or latency in V2X applications may be considered. For example, reliability may be considered for cells having no performance requirements for vehicles platooning. For example, a latency of a time period (e.g., 20ms) may be considered for information sharing between WTRUs and roadside units (RSU). Requirements for mission critical push to talk (MCPTT) (e.g. mouth-to-ear latency (KPI3), such as a KPI3 of 300ms) may be taken into consideration.

One or more types of devices may be deployed as MBS receivers. One type of devices that may be deployed as MBS receivers may be Read-Only Mode (ROM) WTRUs. The ROM WTRUs may not be capable and/or expected to perform uplink transmissions for acquiring and/or receiving MBS transmissions. One type of devices that may be deployed as MBS receivers may be WTRUs implementing functionality, such as functions and/or procedures requiring uplink transmissions. One type of WTRUs that may be deployed as MBS receivers may be WTRUs that may support carrier aggregation, dual connectivity, multiple radio interfaces active concurrently and/or concurrent operation across different frequency ranges (e.g., frequency range 1 (FR1) and/or frequency range 2 (FR2)).

Packet data convergence protocol (PDCP) may be implemented, e.g., in NR. PDCP may be a L2 protocol that may provide several functionalities to incoming and/or outgoing packets, such as: (i) transfer of data (user plane or control plane); (ii) Maintenance of PDCP Sequence Numbers (SNs); (iii) Header compression and decompression using the ROHC (Robust Header Compression); (iv) Ciphering and deciphering of user plane data and control plane data; (v) Integrity protection and integrity verification of user plane and control plane data; (vi) Timer based Service Data Unit (SDU) discard; (vii) For split bearers, routing or duplication; (viii) Reordering and in-order delivery; and/or (ix) Duplicate discarding.

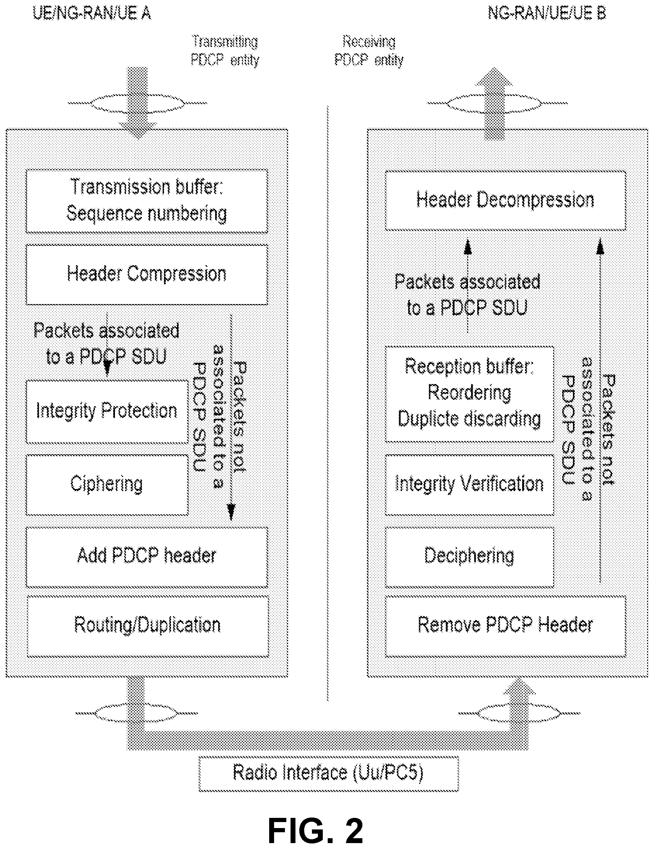

FIG. 2 is a diagram illustrating an example PCDP entity. A radio bearer (e.g., a data radio bearer (DRB), signaling bearer (SRB) or multicast radio bearer (MRB)) may be associated with a PDCP entity (e.g., the example PDCP entity). The example PDCP entity may have both a transmitter and a receiver side, and the functionalities of both are depicted in FIG. 2.

The transmitter side may take data from upper layers and may adapt the received data to the radio. Adapting the received data to the radio may include performing functionalities, such as assigning a block (e.g., each block) of the received data a sequence number (SN), performing headers compression, applying encryption on the received data, applying integrity protection on the received data (e.g., if the received data is integrity protected), and/or adding a PDCP header (a PDCP header that may include the SN and/or additional information). A PDCP packet may then be passed to the radio link control (RLC) layer (e.g., immediately or when radio resources become available for transmission).

The receiver side may perform functionalities opposite of the transmitter side's functionalities, but for data being received from the RLC layer. The functionalities may include removing the PDCP header, deciphering the data, checking the integrity of the packet (e.g., if packet was integrity protected), and/or storing the data in the PDCP receive buffer. The PDCP entity may ensure that the data is delivered in order, e.g., if the PDCP entity is configured to perform such functionality. Otherwise, the data may be forwarded to the upper layer (e.g., immediately). The PDCP may perform in order delivery (e.g., the PDCP may not deliver each packet immediately to upper layers). Out of order delivery may have consequences on application performance, e.g., depending on the transport protocol being employed by a higher layer. For example, variants (e.g., most variants) of TCP implementation may consider out of order reception to be caused by packet loss (e.g., packet loss due to congestion) and may trigger a reduction of the transmission rate (e.g., transmission throughput) at the sender side. In some examples, the PDCP entity may wait for in order delivery before forwarding the packets to upper layers.

In examples, data may have been lost and waiting indefinitely at PDCP for the packets may be avoided. A PDCP entity (e.g., each PDCP entity) may be configured with a reordering timer (e.g., t-reordering), e.g., to prevent indefinitely waiting for the packets. In examples, when a packet is received out of order (e.g. when a packet with SN x is expected by a WTRU and the WTRU receives packet with SN x+n), the WTRU may start a timer with a value equal to the t-reordering value. If the missing packet(s) (e.g., packets with SN between x+1 and x+n) are not received before the timer expires, the PDCP entity may forward the packet with SN x+n. The PDCP entity may forward any packet in the buffer that has SN between x+1 and X+n, as well as packets with SN greater than X+n that may have been received in sequence while the reordering timer was running.

In some cases, SN bit length in NR may be larger than the one in LTE. The MAC-I entity may be added to DRB as well as SRB, which may imply that even DRB can apply integrity protection.

Handover may be implemented, e.g. in NR. Network controlled mobility may apply to WTRUs in RRC_CONNECTED and may be categorized into multiple types of mobility, such as cell level mobility and beam level mobility.

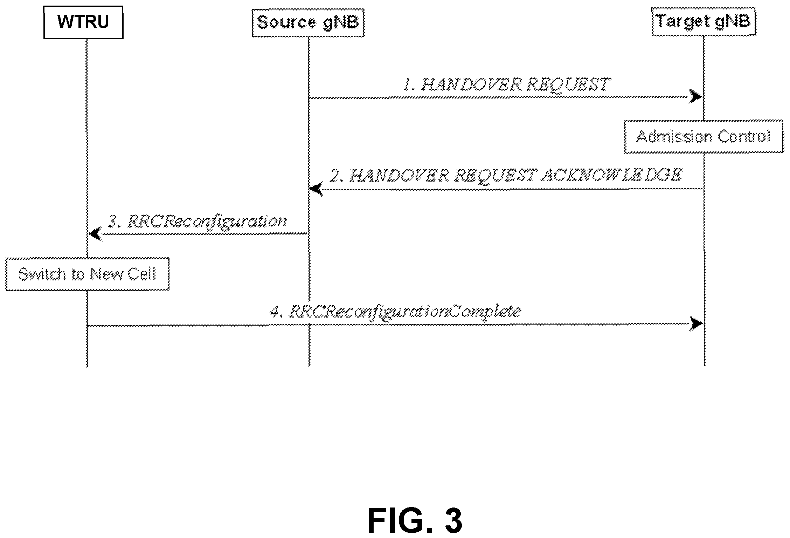

Explicit RRC signaling (e.g., handover signaling) may be triggered for cell level mobility. FIG. 3 shows example inter-cell handover (e.g., inter-gNB handover) procedures. The signaling procedures may include the following. At 1, a source gNB may initiate handover and may issue a HANDOVER REQUEST message over an Xn interface. At 2, a target gNB may perform admission control and may provide a RRC configuration (e.g., a new RRC configuration) as part of a HANDOVER REQUEST ACKNOWLEDGE message. At 3, the source gNB may provide the RRC configuration to the WTRU by forwarding a RRCReconfiguration message received in the HANDOVER REQUEST ACKNOWLEDGE message. The RRCReconfiguration message may include at least a cell ID and the information required to access the target cell so that the WTRU may access the target cell without reading system information. Information required for contention-based and contention-free random access (RA) may be included in the RRCReconfiguration message. The access information to the target cell may include beam specific information (e.g., if beam specific information exists). At 4, the WTRU may move the RRC connection to the target gNB and may reply with a RRCReconfigurationComplete message. User Data may be sent at 4, e.g., if a grant allows.

In the case of dual active protocol stack (DAPS) handover, the WTRU may continue downlink user data reception from the source gNB, e.g., until releasing the source cell. the WTRU may continue uplink user data transmission to the source gNB, e.g., until successful random access procedure to the target gNB.

In some examples, a primary cell (PCell) (e.g., only the PCell) may be kept during DAPS handover. The other serving cells and multi-DCI/single-DCI based multi-TRP may be released by the network, e.g., before a handover command is sent to the WTRU.

A handover mechanism triggered by RRC may require the WTRU at least to reset the MAC entity and re-establish RLC, except for DAPS handover. In examples, in DAPS handover, upon reception of the handover command, the WTRU may perform one or more of the following: creating a MAC entity for target; establishing the RLC entity and an associated DTCH logical channel for target (e.g., for each DRB configured with DAPS); for a DRB configured with DAPS (e.g., each DRB configured with DAPS) reconfiguring the PDCP entity with separate security and ROHC functions for source and target and associating them with the RLC entities configured by source and target respectively; or retaining the rest of the source configurations, e.g., until release of the source. The handling on RLC and PDCP for DRBs not configured with DAPS may be the same as in normal handover.

RRC managed handovers with and/or without PDCP entity re-establishment may be supported. In examples, for DRBs using RLC AM mode, a PDCP entity may be re-established together with a security key change or may initiate a data recovery procedure without a key change. In examples, for DRBs using RLC UM mode and for SRBs, a PDCP entity may be re-established together with a security key change or may remain as it is, e.g., without a key change.

In examples, data forwarding, in-sequence delivery and duplication avoidance at handover may be guaranteed if a target cell (e.g., a target gNB) uses the same DRB configuration as a source cell (e.g, a source gNB).

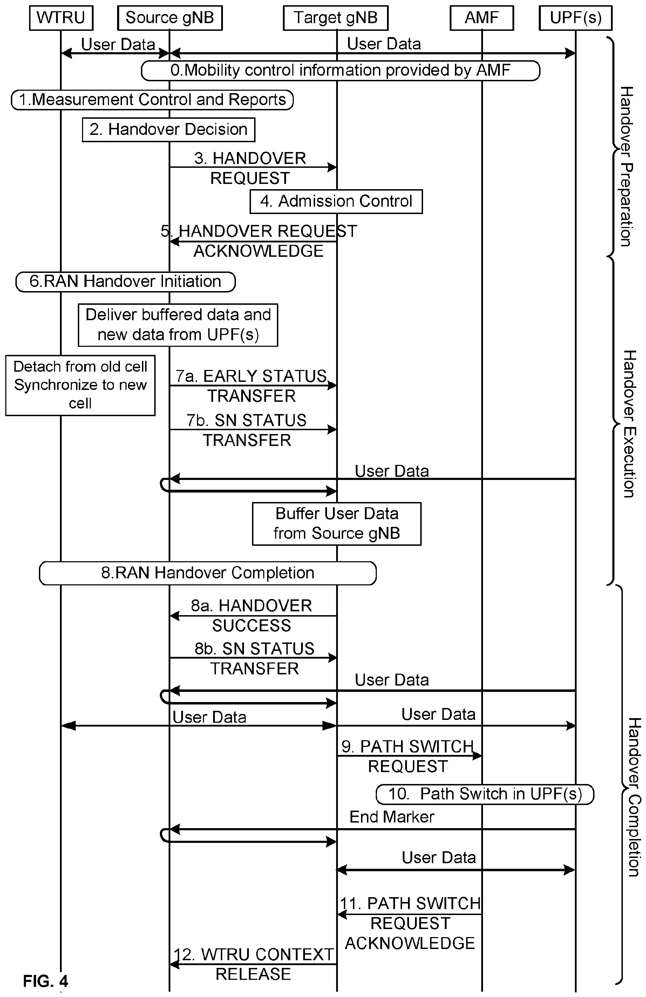

An intra-cell RAN handover (e.g., an intra-NR RAN handover) may perform a preparation and execution phase of the handover procedure performed (e.g., without involvement of the core network (e.g., the 5GC)). For example, the preparation messages may be (e.g., directly) exchanged between the gNBs. In examples, release of the resources at a source cell (e.g., a source gNB) during a handover completion phase may triggered by a target cell (e.g., a target gNB). FIG. 4 shows an example handover process. The example handover process depicts a handover scenario wherein neither the AMF nor the UPF changes.

At 0, the WTRU context within the source gNB contains information regarding roaming and access restrictions which were provided either at connection establishment or at the last TA update.

At 1, the source gNB may configure the WTRU measurement procedures and the WTRU may report according to the measurement configuration.

At 2, the source gNB may decide to handover the WTRU, e.g., based on MeasurementReport and RRM information.

At 3, the source gNB may issue a Handover Request message to the target gNB. The message may pass a transparent RRC container with information (e.g., necessary information) to prepare the handover at the target side.

At 4, admission control may be performed by the target gNB. In examples, slice-aware admission control may be performed if the slice information is sent to the target gNB. If the PDU sessions are associated with non-supported slices, the target gNB may reject such PDU sessions.

At 5, the target gNB may prepare the handover with L1/L2 and may send the HANDOVER REQUEST ACKNOWLEDGE message to the source gNB. The HANDOVER REQUEST ACKNOWLEDGE message may include a transparent container to be sent to the WTRU as an RRC message to perform the handover. The target gNB may indicate (e.g., to the source gNB) if a DAPS handover is accepted. In examples, data forwarding may be initiated, e.g., on a condition that the source gNB receives the HANDOVER REQUEST ACKNOWLEDGE message, and/or on a condition that the transmission of the handover command is initiated in the downlink.

At 6, the source gNB may triggers the Uu handover by sending an RRCReconfiguration message to the WTRU, containing information (e.g., required information) to access the target cell. The information may at least include the target cell ID, the new C-RNTI, the target gNB security algorithm identifiers for the selected security algorithms. The information may include a set of dedicated RACH resources, the association between RACH resources and SSB(s), the association between RACH resources and UE-specific CSI-RS configuration(s), common RACH resources, and system information of the target cell, etc.

At 7, the source gNB may send the SN STATUS TRANSFER message to the target gNB to convey the uplink PDCP SN receiver status and the downlink PDCP SN transmitter status of DRBs for which PDCP status preservation applies (e.g., for RLC AM). The uplink PDCP SN receiver status may include at least the PDCP SN of the first missing UL PDCP SDU and may include a bit map of the receive status of the out of sequence UL PDCP SDUs that the WTRU may (or may need to) retransmit in the target cell, if any. The downlink PDCP SN transmitter status may indicate the next PDCP SN that the target gNB may assign to new PDCP SDUs, e.g., PDCP SDUs that do not have a PDCP SN yet.

At 8, the WTRU may synchronize to the target cell and may complete the RRC handover procedure by sending RRCReconfigurationComplete message to target gNB. The WTRU may release the source SRB resources, security configuration of the source cell and may stop DL/UL reception and/or transmission with the source, e.g., on a condition of receiving an explicit release from the target node.

At 9, the target gNB may send a PATH SWITCH REQUEST message to AMF to trigger a core network (e.g., 5GC) to switch the DL data path towards the target gNB and to establish a control plane interface (e.g., an NG-C interface) instance towards the target gNB.

At 10, 5GC may switch the DL data path towards the target gNB. The UPF may send one or more end-marker packets on the old path to the source gNB per PDU session/tunnel and then may release any U-plane/TNL resources towards the source gNB.

At 11, the AMF may confirm the PATH SWITCH REQUEST message with the PATH SWITCH REQUEST ACKNOWLEDGE message.

At 12, on a condition of receiving the PATH SWITCH REQUEST ACKNOWLEDGE message from the AMF, the target gNB may send the WTRU CONTEXT RELEASE to inform the source gNB about the success of the handover. The source gNB may then release radio and C-plane related resources associated to the WTRU context. Any ongoing data forwarding may continue.

The UP (user plane) during the intra-cell access mobility (e.g., intra-NR-Access mobility) activity for WTRUs in RRC_CONNECTED may perform the following to avoid data loss during HO. In examples, during HO preparation, U-plane tunnels may be established between the source gNB and the target gNB. In examples, during HO execution, user data may be forwarded from the source gNB to the target gNB. Forwarding may take place in order as long as packets are received at the source gNB from the UPF or the source gNB buffer has not been emptied. In examples, during HO completion, the target gNB may send a path switch request message to the AMF to inform that the WTRU has gained access and the AMF then may trigger path switch related 5GC internal signaling and actual path switch of the source gNB to the target gNB in UPF; the source gNB may continue forwarding data as long as packets are received at the source gNB from the UPF or the source gNB buffer has not been emptied.

In the case of RLC-AM bearers, one or more of the following may be implemented.

For in-sequence delivery and duplication avoidance, PDCP SN may be maintained on a per DRB basis and the source gNB may inform the target gNB about the next DL PDCP SN to allocate to a packet that does not have a PDCP sequence number yet (e.g., a PDCP sequence number from source gNB or from the UPF).

For security synchronization, HFN may be maintained and the source gNB may provide to the target one reference HFN for the UL and one for the DL, e.g., a HFN and a corresponding SN.

In the WTRU and the target gNB, a window-based mechanism may be used for duplication detection and reordering. The occurrence of duplicates over the air interface in the target gNB may be minimized by means of PDCP SN based reporting at the target gNB by the WTRU. In uplink, the reporting may be configured (e.g., optionally) on a per DRB basis by the gNB and the WTRU may first start by transmitting those reports when granted resources are in the target gNB. In downlink, the gNB may be free to decide when and for which bearers a report is sent and the WTRU may not wait for the report to resume uplink transmission.

The target gNB may re-transmit and may prioritize downlink data (e.g., downlink data forwarded by the source gNB) (e.g., the target gNB may first send forwarded PDCP SDUs with PDCP SNs, then may send forwarded downlink PDCP SDUs without SNs before sending data (e.g., new data) from 5GC), excluding PDCP SDUs for which the reception is acknowledged through PDCP SN based reporting by the WTRU. The old DRB may be configured in the target cell for lossless delivery, e.g., when a QoS flow is mapped to a different DRB at handover. For in-order delivery in the DL, the target gNB may first transmit the forwarded PDCP SDUs on the old DRB before transmitting new data from 5GC on the new DRB. For in-order delivery in the UL, the target gNB may not deliver data of the QoS flow from the new DRB to 5GC before receiving the end marker on the old DRB from the WTRU.

The WTRU may re-transmit to the target gNB uplink PDCP SDUs starting from the oldest PDCP SDU that has not been acknowledged at RLC in the source, excluding PDCP SDUs for which the reception was acknowledged through PDCP SN based reporting by the target.

For RLC-UM bearers, one or more of the following may be implemented.

The PDCP SN and HFN may be reset in the target gNB, unless the bearer is configured with DAPS handover. No PDCP SDUs may be retransmitted in the target gNB.

The target gNB may prioritize downlink SDAP SDUs forwarded by the source gNB over the data from the core network. The old DRB may be configured in the target cell to minimize losses, e.g., when a QoS flow is mapped to a different DRB at handover. For in-order delivery in the DL, the target gNB may first transmit the forwarded PDCP SDUs on the old DRB before transmitting new data from 5GC on the new DRB. For in-order delivery in the UL, the target gNB may not deliver data of the QoS flow from the new DRB to 5GC before receiving the end marker on the old DRB from the WTRU.

The WTRU may not retransmit any PDCP SDU in the target cell for which transmission had been completed in the source cell.

DAPS handover may be implemented, e.g. in NR and LTE. DAPS handover may reduce the interruption time during handover (e.g., interruption time may range from 30ms to 60ms in LTE, depending on the handover scenario). Reducing the interruption time may prevent the quality of highly delay sensitive services from being degraded because of mobility.

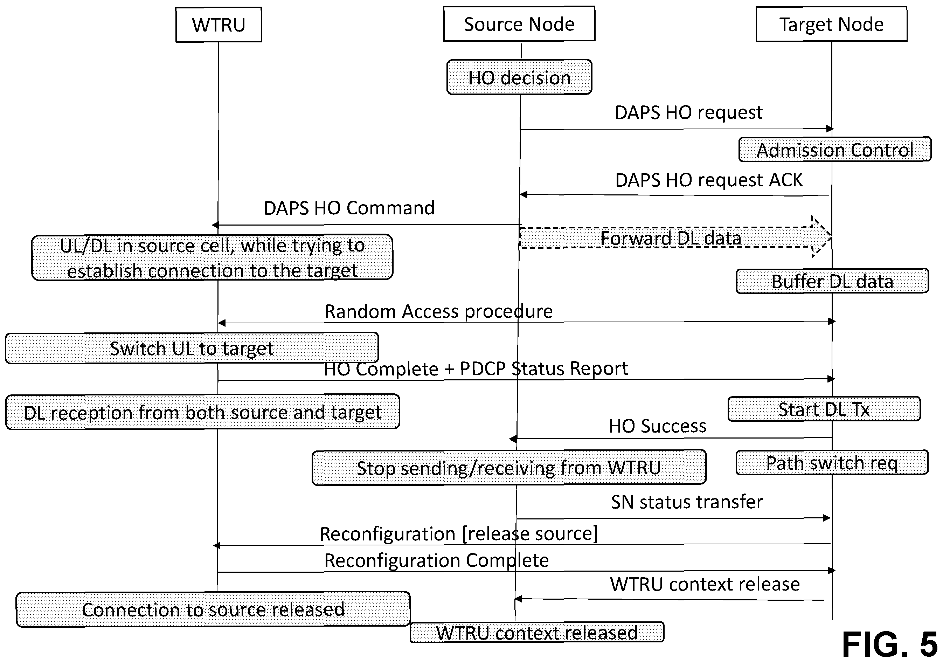

FIG. 5 shows an example DAPS handover process. The source node, in response to deciding to perform a DAPS HO, may send a DAP HO request to the target node. A DAPS HO request may be a handover request that includes information regarding to which DRBs the DAPS HO is to be applied (e.g., it is possible that for some DRBs normal HO may be applied). After performing admission control, the target may respond with a HO request acknowledgement.

The source may send a DAPS HO command to the WTRU, which may be an RRC Reconfiguration with reconfigurationWithSync that may contain an indication regarding which DRBs are to be involved in DAPS HO. The source may continue normal operation for UL data (e.g., forwarding it to the core network) and for DL data (e.g., sending it to the WTRU). The source may start forwarding the DL data towards the target.

On a condition that the WTRU has managed to perform random access with the target, UL data transmission may be switched to the target, but DL reception may be still performed from the source. The WTRU may send a HO complete, which is an RRC Reconfiguration Complete message, to the target, including the PDCP status report for those DRBs that were configured for DAPS HO. The target may start sending the buffered DL data to the WTRU, using the status information provided by the WTRU to avoid the sending of duplicate packets (e.g., packets forwarded from the source but now indicated to have been received by the WTRU).

The target may indicate the success of the handover to the source, after which the source may stop sending and receiving data to/from the WTRU. The target may initiate path switch towards the core, so that DL data (e.g., new DL data) may be sent to the target node (e.g., instead of the source). The target may indicate to the WTRU the DAPS HO is finalized by sending an RRC Reconfiguration message that may contain a daps-SourceRelease indicator, upon which the WTRU may release the connection to the source. The target may send a context release message to the source and the WTRU context at the source may be released.

DAPS handover may be configured on a DRB level. In some examples, normal PDCP/RLC/MAC procedures applied for the bearers may not be configured for DAPS handover. A handover may referred to as a DAPS handover if at least one bearer is configured for DAPS. The handover mechanism triggered by RRC may require the WTRU at least to reset the MAC entity and/or re-establish RLC, except for DAPS handover. In response to reception of a handover command, the WTRU may perform one or more of the following. The WTRU may create a MAC entity for the target. The WTRU may establish the RLC entity and an associated logical channel for the target for each DRB configured with DAPS (hence the name dual protocol stack). For the DRB configured with DAPS, the WTRU may reconfigure the PDCP entity with separate security and ROHC functions for source and target and may associate them with the RLC entities configured by the source and the target. The WTRU may retain the rest of the source configurations until instructed to release the source

Since the mobile terminal may receive user data (e.g., simultaneously) from the source and target cell, the PDCP layer may be reconfigured to a common PDCP entity for the source and target user plane protocol stacks. To secure in-sequence delivery of user data, PDCP Sequence Number (SN) continuation may be maintained throughout the handover procedure. A common (e.g., for a source and a target) re-ordering and duplication function may be provided in the single PDCP entity. Ciphering/deciphering and header compression/decompression may be handled (e.g., separately) in the common PDCP entity, depending on the origin/destination of the DL/UL packet.

A WTRU (e.g., a WTRU that has an active MRB session) may start performing a handover from a source node to a target node. In example scenario A, the source (e.g., the source node) may be ahead of the target (e.g., the target node), e.g., with regard to transmission of MRB packets (e.g. if WTRUs in the source cells are receiving packet with SNs and WTRUs in the target are receiving SNy, SNy is less than SNx (e.g., SNy < SNx)). In example scenario B, the source may be behind the target, e.g., with regard to the transmission of the MRB packets (e.g. if WTRUs in the source cells are receiving packet with SNs and WTRUs in the target are receiving SNy, SNy is greater than SNx (e.g., SNy > SNx)). In example scenario C, the source and target may be in sync, e.g., with regard to the transmission of the MRB packets (e.g., WTRUs in the two cells receive packets with the same PDCP SN at the same frame/slot).

In examples, if a transmission/reception towards the source is stopped (e.g., immediately) in response to reception of a handover command at a WTRU (e.g., in a regular handover), in example scenario B and/or example scenario C above, a first packet to be received from the target via PTM may be out of order (e.g., when a PDCP SNy (e.g., for a PDCP packet received by the target) is greater than a PDCP SNx (e.g., for a PDCP packet received by the source), such as when SNy > SNx + 1). In example scenario A, a first packet received by a WTRU from the target may be out of order. In examples, the target may have managed to send packets from SNy+1 to SNx+1, e.g., by the time the handover is completed at the WTRU (e.g., including the processing of the handover command, sub procedures like RA to the target and sending of the reconfiguration complete message, etc.)

In examples, if PTM operation (e.g., only PTM operation) is supported for MBS at the WTRU/network, this may result in stalling of an MBS reception at a WTRU. The WTRU may wait for missing packet(s) (e.g., missing packet(s) that may not arrive from the target's PTM transmission). A duration of the stalling may depend on a value of t-reordering configured for the PDCP of the MRB (e.g., the value may be configured to be up to a number of seconds (e.g., 3 seconds)). If the t-reordering has elapsed, the WTRU may stop waiting for the missing packet(s) and may deliver the packets out of order. The PDCP window may progress.

In examples, reception of data for MBS during handover may experience packet loss and/or interruption of the MBS service, for example, when only PTM is supported.

HO may be performed with MBS. Herein, any description where only one active MRB is configured at a WTRU is an nonlimiting example. Such description may be applicable to the case where the WTRU has multiple active MRBs. The described system behavior may be for one of the multiple active MRBs, a subset of the MRBs, or all the MRBs.

A WTRU may disconnect from a source in response to (e.g., immediately upon) the reception of a handover command. The WTRU's behavior until the reception of a first packet from a target may be the same as a normal handover procedure (e.g., including disconnecting from the source immediately on the reception of the handover command, performing RA to the target, and/or sending the reconfiguration complete to the target).

A WTRU may trigger PDCP status reporting in response to (e.g., immediately after) HO, e.g., to trigger retransmission(s). In examples, in response to the reception of a first PDCP packet for an MRB from the target, the WTRU may determine if the packet is received out of order (e.g., the SN of the PDCP packet is greater than a next expected SN at the PDCP receiver buffer), and if the packet is determined to be received out of order, the WTRU may send a PDCP status report to the target, which may indicate the missing PDCP SN(s).

The target may send the missing packet(s) to the WTRU. This may be performed via PTP and/or PTM. The target may obtain the missing packet(s) using at least the following processes. In examples, the target may keep a certain number/window of PDCP packets buffered for a duration (e.g., a certain duration), e.g., even in response to (e.g., after) their successful transmission/reception via PTM (e.g., including cases that WTRUs may be handed over from other cells/nodes that are behind in terms of MBS transmission). In examples, in response to the reception of the status report from the WTRU, the target may request the source to send the concerned packet(s) (e.g., the missing packet(s)). In examples, the source may keep on forwarding packets to the target for a certain duration and/or for a certain number of packets in response to (e.g., after) sending the handover command to the WTRU .

The WTRU may trigger out of order delivery in response to (e.g., after) HO to stop stalling of PDCP reception. In examples, in response to the reception of the first PDCP packet for an MRB from the target, the WTRU may forward this packet to upper layers, e.g., even if the packet is received out of order (e.g., the SN of the PDCP packet is greater than a next expected SN at the PDCP receiver buffer). The WTRU may reset and/or update one or more of the PDCP receive window parameters (e.g., setting next expected PDCP SN = first received packet from target + 1). The WTRU may revert to in order delivery mode (e.g., if the PDCP of the MRB has not explicitly been configured by the network for out of order delivery). In examples, the WTRU may determine whether to apply the sending of status reports or reverting to out of order delivery, e.g., depending on the QoS requirements of the concerned MRB. For example, if the MRB is associated with certain reliability requirement(s) (e.g. high reliability requirements associated with file download, firmware update for V2x, etc.), the WTRU may apply sending the PDCP status report. If an MRB is associated with lower reliability requirement(s) but stricter latency requirement(s) (e.g., associated with live video streaming of a sports event), the WTRU may apply reverting to out of order delivery to upper layers.

In examples, the WTRU may remain connected to the source after receiving a handover command (e.g., until one or more conditions are met). The WTRU may stay connected to source (e.g., monitor for data from the source cell and/or receive data from the source cell) and may stop based on there being no gap in received packets, e.g., there is in order reception of packets from the target. The source cell may be A in FIG. 6 and the target cell may be B in FIG. 6. In examples, a WTRU that has an active MRB (e.g., 501 in FIG. 6) may stay connected with the source (e.g., A in FIG. 6) after the reception of the handover command (e.g., at time 502 in FIG. 6), e.g.,may keep monitoring for packets from the source cell and/or receiving packets from the source cell for the MRB via PTM (e.g., receiving packets with SNs n+4, n+5, n+6, and n+7 after time 502, as shown in FIG. 6). The WTRU may keep receiving from the source, e.g., via PTM, and the target on a condition that there is a gap between the packets received from the source and target and may stop monitoring/receiving from the source cell based on there being no gap in received packets (e.g., receiving packets from A until time 504, which is when there is no gap between SNs n through n+7 from A and SNs n+8 through n+11 from B, as shown in FIG. 6). In examples, there is no gap in received packets if the SN of the packet with the largest SN received from the source is greater than or equal to the SN of the packet with the smallest SN received from the target.

In examples, the PDCP SN of a packet (e.g., first received packet) via the target may be SNy (e.g., n+8 from B, as shown in FIG. 6). If the packet for the MRB received from the target is in order or a duplicate (e.g., SNy <= expected SN at the PDCP receive buffer), the WTRU may disconnect from the source (e.g., stop monitoring/receiving from the source cell and/or release a resource associated with the source). If the packet for the MRB received from the target is out of order (e.g., n+8 is greater than expected SN, n+4, as shown in FIG. 6) (e.g., SNy > expected PDCP SN +n), the WTRU may wait until the packets up to SNy-1 are received (e.g., via the source and/or the target) before disconnecting from the source (e.g., receiving packets from A until time 504, which is when there is no gap between SNs n through n+7 from A and SNs n+8 through n+11 from B, as shown in FIG. 6).

In examples, the WTRU may have received some packets from the source during the time of (e.g., upon) the handover execution. The WTRU (e.g., then) may receive (e.g., may have received) packets with SNs+1 and SNs+2 while the HO is being executed (e.g., RA to the target, sending of the complete message to the target, etc.). The first packet received from the target may have SNy. If SNy > SNs+n (e.g., n>3), the WTRU may keep receiving packet(s) from the source (e.g., monitor for data from the source cell and/or receive data from the source cell), and may stop based on there being no gap in received packets (e.g., there are no missing holes in the PDCP receive buffer for the MRB), e.g., the WTRU has received packet with SNy - 1.

FIG. 6 is a diagram illustrating an example associated with handover, as described herein.

In examples, the WTRU (e.g., with an active MBS session) may receive an HO command. The WTRU may receive configuration information (e.g., in the HO command or prior to the HO command), which may include condition(s) under which to stop communicating with the source in response to the HO (e.g. if there is no gap between the PDCP SNs from the source and the target, in response to a certain time duration, depending on source/target radio conditions, etc.). The WTRU may execute the HO command and may maintain a connection (e.g., receiving MBS data) with the source. The WTRU may determine whether the condition(s) under which to disconnect from the source are fulfilled. The WTRU may determine the condition(s) are fulfilled and may release the connection with the source (e.g., release a resource associated with the source) and may receive MBS data only from the target.

A WTRU may be configured to be connected to source unless a packet with a certain PDCP SN is received from the source. In examples, a WTRU that has an active MRB may receive configuration information from the network (e.g., a source) (e.g., in a RRC reconfiguration message that is the HO command). The configuration information may include a PDCP SN value associated with the MRB. The WTRU may keep connected with the source and may continue receiving packet(s) via PTM from the source and the target for the MRB, unless it has received a packet with the SN (e.g., from the source or target). In response to having received the packet with the SN, the WTRU may disconnect from the source.

In examples, if in response to the disconnection from the source, there are still missing packet(s) (e.g., with SN(s) that are between a maximum PDCP SN received via the source and a minimum PDCP SN received from the target), the WTRU may trigger a PDCP status report to the target.

The WTRU may be configured to be connected to source for a duration (e.g., a certain duration) in response to the reception of the handover command. In examples, the WTRU that has an active MRB may receive configuration information from the network (e.g., a source) (e.g., in a RRC reconfiguration message that is the HO command). The configuration information may include time duration information (e.g. an absolute time value in ms, a frame/slot number, etc). During the specified time duration (or until the specified time duration in a case the indication was a frame/slot number), the WTRU may remain connected with the source and may continue receiving packet(s) via PTM from the source and target for the MRB. If the time duration has elapsed (or the specified frame/slot number is reached), the WTRU may disconnect from the source.

In examples, if in response to the disconnection from the source, there are still missing packet(s) (e.g., with SN(s) that are between a maximum PDCP SN received via the source and a minimum PDCP SN received from the target), the WTRU may trigger a PDCP status report to the target.

In examples, the WTRU may disconnect from the source (e.g., even before the specified time duration has elapsed), e.g., if the WTRU determines that there are no more missing packet(s) (e.g., no missing packet(s) with SN(s) that are between the SN of the first packet received from target and the last in order received packet from the source).

The WTRU may be configured to be connected to source if certain conditions/thresholds are fulfilled/valid. In examples, the WTRU that has an active MRB may receive configuration information from the network (e.g., a source) (e.g. in a RRC reconfiguration message that is the HO command). The configuration information may include condition(s) and/or threshold(s) associated with determining if the WTRU may keep connected to the source and/or if the WTRU may disconnect from the source.

In examples, the condition(s) and/or threshold(s) may be related to the source's radio link condition (e.g. a RSRP/RSRQ/RSNI threshold). The WTRU may keep connected with the source and may receive data for the MRB via the source and the target if the condition(s) are valid. For example, if an RSRP threshold of x dBm is specified, the WTRU may continue to receive data for the MRB via the source if the RSRP to the source is above x dBm, and may disconnect from the source and may receive MRB data via the target (e.g., only via the target) in response to disconnecting from the source.

In examples, the condition(s)/threshold(s) may be related to the target's radio link condition (e.g. a RSRP/RSRQ/RSNI threshold). The WTRU may keep connected with the source and may receive data for the MRB via the source and the target if the condition(s) are valid. For example, if an RSRP threshold of x dBm is specified, the WTRU may continue to receive data for the MRB via the source if the RSRP to the target is below x dBm, and may disconnect from the source and receive MRB data via the target (e.g., only via the target) in response to disconnecting from the source.

In examples, the condition(s) and/or threshold(s) may be related to the source's and the target's radio link conditions (e.g. RSRP/RSRQ/RSNI thresholds). The WTRU may keep connected with the source and may receive data for the MRB via the source and the if while the condition(s) are valid. The condition(s)/threshold(s) may be absolute threshold(s) regarding the source and target radio links. For example, a RSRP threshold x dBm towards the source and y dBm towards the target may be an absolute threshold. The threshold may be interpreted as follows: keeping the connection to the source and receiving MRB data from the source and target if a RSRP to the source is above x dBm and a RSRP to the target is below y dBm; or keeping the connection to the source and receiving MRB data from the source and target if the RSRP to the source is above x dBm or the RSRP to the target is below y dBm.

The condition(s) and/or threshold(s) may be relative thresholds regarding the source and target radio links. For example, a relative RSRP threshold of z dB may indicate to the WTRU that the WTRU may keep connected to the source and may receive MRB data from the source and target if the RSRP to the source is better than the RSRP to the target by z dBs.

For example, a time to trigger (TTT) may be specified, e.g., to indicate for how long the condition(s) must hold for the WTRU to consider the condition(s) as fulfilled. For example, if a RSRP threshold with the source is specified to be not less than xdBm for maintaining connection to the source and reception of MRB data via PTM from the source, a TTT of n ms may indicate that the WTRU may disconnect from the source in response to determining that the signal with the source is below xdBm for n ms.

For example, if in response to the disconnection from the source, there are still missing packet(s) (e.g., with SN(s) that are between a maximum PDCP SN received via the source and a minimum PDCP SN received from the target), the WTRU may trigger a PDCP status report to the target.

Combination of the different condition(s)/configuration(s) for keeping a connection with the source in response to the reception of the handover command described herein may be implemented. For example, a WTRU may be configured to keep a source connection, e.g., unless a certain duration has elapsed or a packet with a certain PDCP SN has been received; unless a certain duration has elapsed and a packet with a certain PDCP SN has been received; and/or unless a certain duration has elapsed or the radio condition(s) towards the source are above a certain threshold.

A WTRU may be configured to be connected with source and may operate without hybrid automatic repeat request (HARQ). As described herein, the WTRU may keep connected with the source for a time period with the source. During the time period, even if the WTRU has one MRB (e.g., only one MRB) configured (e.g., all data transmission is downlink), the WTRU may need to transmit in the UL, e.g., if L1 HARQ is configured. In some examples, the WTRU may include one RF unit for the UL and may perform time domain switching towards the source and target.

The WTRU may be configured to operate without HARQ towards the source for the MRB during a time period wherein the WTRU is receiving MRB data from the source and the target. The WTRU may not perform UL transmission to the source. The source may be unaware of whether that WTRU is still in that session or not. The WTRU can read the source's PDCCH and identify the scheduling for the G-RNTI associated with the concerned MRB (e.g., as the WTRU may be autonomously listening to the broadcasted information for the WTRUs in the broadcast).

The WTRU may be configured to operate without HARQ towards the target for the MRB during a time period wherein the WTRU receives MRB data from the source and the target (e.g., in the case that the WTRU maintains HARQ with the source). If the condition(s) are not fulfilled to keep connected with the source and the WTRU becomes connected only with the target, the HARQ operation towards the target may be resumed.

A WTRU may be configured with several MRBs. The examples provided herein with a single MRB are not limiting in scope or applicability. The examples are applicable to the case where the WTRU may have more than one MRB.

The configurations for keeping connected to the source for a certain duration or if certain condition(s) are fulfilled (or not fulfilled), may be the same for the MRBs. For example, the WTRU may be configured to keep connection with the source and may keep receiving the data for the MRBs from the source unless a certain duration has elapsed.

Different configurations for keeping connected to the source may be specified. For example, the WTRU may stop receiving data for certain MRBs and may keep receiving data for certain MRBs unless a certain duration has elapsed or a certain condition is fulfilled (e.g., the WTRU may stop monitoring the G-RNTI associated with the first MRB in the source's PDCCH, may monitor the G-RNTI associated with the other MRBs and may follow the scheduling therein to receive the MRB data). Different duration values or radio condition thresholds may be specified for the different MRBs or sets of MRBs. The HARQ operation may be be set on/off as described herein at an MRB level.

The WTRU may be configured to handle DRBs as well as MRBs from the source. In the examples described herein, it is described how the WTRU handles MRBs. A WTRU may have DRBs and MRBs configured at the same time.

For example, if the WTRU has MRBs and DRBs configured/active at the same time, the source connection may be used (e.g., used only) for MRB handling (e.g., UL/DL transmission concerning the DRB may be towards the target (e.g., only the target) in response to the reception of the handover command).

For example, when the WTRU has MRBs and DRBs configured/active at the same time, the source connection may be used for DRB handling (e.g., UL/DL transmission concerning the DRBs may be performed towards the source and the target). This may be implemented by including a DAPS configuration for the concerned DRBs.

Although features and elements described above are described in particular combinations, each feature or element may be used alone without the other features and elements of the preferred embodiments, or in various combinations with or without other features and elements.

Although the implementations described herein may consider 3GPP specific protocols, it is understood that the implementations described herein are not restricted to this scenario and may be applicable to other wireless systems. For example, although the solutions described herein consider LTE, LTE-A, New Radio (NR) or 5G specific protocols, it is understood that the solutions described herein are not restricted to this scenario and are applicable to other wireless systems as well.

The processes described above may be implemented in a computer program, software, and/or firmware incorporated in a computer-readable medium for execution by a computer and/or processor. Examples of computer-readable media include, but are not limited to, electronic signals (transmitted over wired and/or wireless connections) and/or computer-readable storage media. Examples of computer-readable storage media include, but are not limited to, a read only memory (ROM), a random access memory (RAM), a register, cache memory, semiconductor memory devices, magnetic media such as, but not limited to, internal hard disks and removable disks, magneto-optical media, and/or optical media such as compact disc (CD)-ROM disks, and/or digital versatile disks (DVDs). A processor in association with software may be used to implement a radio frequency transceiver for use in a WTRU, terminal, base station, RNC, and/or any host computer.

## Claims

1. A wireless transmit-receive unit, WTRU, (102), wherein
the WTRU has been configured for multicast broadcast service, MBS, wherein being configured for the MBS comprises being configured with at least one active multicast radio bearer, MRB;
the WTRU comprising a processor (118) configured to:
receive a handover command;
send a connection request to a target cell (B);
receive one or more packets from the target cell;
receive one or more packets from a source cell (A), wherein the one or more packets from the source cell are received from the source cell after the connection to the target cell;
determine, based on at least one of the received one or more packets from the source cell or the received one or more packets from the target cell, that there are no missing packets; and
send, based at least on the determination that there are no missing packets, a release connection request to a resource associated with the source cell,
wherein the one or more packets are related to the MBS.

2. The WTRU of claim 1, wherein being configured to receive the one or more packets from the source cell comprises the processor being configured to use the resource associated with the source cell to receive the one or more packets from the source cell.

3. The WTRU of claim 1, wherein being configured to determine that there are no missing packets comprises the processor being configured to determine that there is not a sequence number gap, and wherein the sequence number gap is a gap between sequence numbers of received packets.

4. The WTRU of claim 1, wherein the resource associated with the source cell is a group-radio network temporary identifier, G-RNTI, associated with the source cell.

5. The WTRU of claim 1, wherein, after the handover command is received, a hybrid automatic repeat request, HARQ, transmission is not sent to the source cell in response to the received one or more packets from the source cell.

6. The WTRU of claim 1, wherein the handover command includes at least one condition, wherein being configured to send the release connection request to the resource associated with the source cell is further based on the at least one condition being satisfied.

7. The WTRU of claim 6, wherein the at least one condition is one or more of a specified time duration, a specified signal level threshold associated with the source cell, or a specified signal level threshold associated with the target cell.

8. The WTRU of claim 1, wherein being configured to determine that there are no missing packets comprises the processor being configured to determine, based on at least one of the received one or more packets from the source cell or the received one or more packets from the target cell, that the received packets satisfy a continuous sequence number condition.

9. A method performed by a wireless transmit-receive unit, WTRU, (102), wherein
the WTRU has been configured for multicast broadcast service, MBS, wherein being configured for the MBS comprises being configured with at least one active multicast radio bearer, MRB;
the method comprising:
receiving a handover command;
sending a connection request to a target cell (B);
receiving one or more packets from the target cell;
receiving one or more packets from a source cell (A), wherein the one or more packets from the source cell are received from the source cell after the connection to the target cell;
determining, based on at least one of the received one or more packets from the source cell or the received one or more packets from the target cell, that there are no missing packets; and
sending, based at least on the determination that there are no missing packets, a release connection request to a resource associated with the source cell,
wherein the one or more packets are related to the MBS.

10. The method of claim 9, wherein receiving the one or more packets from the source cell comprises being configured to use the resource associated with the source cell to receive the one or more packets from the source cell.

11. The method of claim 9, wherein determining that there are no missing packets comprises determining that there is not a sequence number gap, and wherein the sequence number gap is a gap between sequence numbers of received packets.

12. The WTRU of claim 1 or the method of claim 9, wherein the handover command is received using a radio resource control, RRC, message.

13. The method of claim 9, wherein the resource associated with the source cell is a group-radio network temporary identifier, G-RNTI, associated with the source cell, and wherein after the handover command is received, a hybrid automatic repeat request, HARQ, transmission is not sent to the source cell in response to the received one or more packets from the source cell.

14. The method of claim 9, wherein the handover command includes at least one condition, wherein being configured to send the release connection request to the resource associated with the source cell is further based on the at least one condition being satisfied, wherein the at least one condition is one or more of a specified time duration, a specified signal level threshold associated with the source cell, or a specified signal level threshold associated with the target cell.

15. The method of claim 9, wherein determining that there are no missing packets comprises determining, based on at least one of the received one or more packets from the source cell or the received one or more packets from the target cell, that the received packets satisfy a continuous sequence number condition.

## Patentansprüche

1. Drahtlos-Sende- und -Empfangseinheit (Wireless Transmit/Receive Unit, WTRU) (102), wobei die WTRU für einen Multicast-Rundsendedienst (Multicast Broadcast Service, MBS) eingerichtet wurde, wobei der Umstand, für den MBS eingerichtet zu sein, umfasst, mit mindestens einem aktiven Multicast-Funkträger (Multicast Radio Bearer, MRB) eingerichtet zu sein; wobei die WTRU einen Prozessor (118) umfasst, der eingerichtet zum:
Empfangen eines Übergabebefehls;
Senden einer Verbindungsanforderung an eine Zielzelle (B);
Empfangen eines oder mehrerer Pakete von der Zielzelle;
Empfangen eines oder mehrerer Pakete von einer Quellenzelle (A), wobei das eine oder die mehreren Pakete von der Quellenzelle nach der Verbindung mit der Zielzelle von der Quellenzelle empfangen werden;
Bestimmen, auf der Grundlage mindestens eines der von der Quellenzelle empfangenen einen oder mehreren Pakete oder der von der Zielzelle empfangenen einen oder mehreren Pakete, dass keine Pakete fehlen;
Senden, mindestens auf der Grundlage der Bestimmung, dass keine Pakete fehlen, einer Verbindungsfreigabeanforderung an eine mit der Quellenzelle verknüpfte Ressource,
wobei sich das eine oder die mehreren Pakete auf den MBS beziehen.

2. WTRU nach Anspruch 1, wobei der Umstand, zum Empfangen des einen oder der mehreren Pakete von der Quellenzelle eingerichtet zu sein, umfasst, dass der Prozessor dazu eingerichtet ist, die mit der Quellenzelle verknüpfte Ressource zum Empfangen des einen oder der mehreren Pakete von der Quellenzelle zu verwenden.

3. WTRU nach Anspruch 1, wobei der Umstand, zum Bestimmen eingerichtet zu sein, dass keine Pakete fehlen, umfasst, dass der Prozessor dazu eingerichtet ist zu bestimmen, dass es keine Sequenznummernlücke gibt, und wobei die Sequenznummernlücke eine Lücke zwischen Sequenznummern empfangener Pakete ist.

4. WTRU nach Anspruch 1, wobei die mit der Quellenzelle verknüpfte Ressource eine mit der Quellenzelle verknüpfte temporäre Gruppen-Funknetzkennung (Group Radio Network Temporary Identifier, G-RNTI) ist.

5. WTRU nach Anspruch 1, wobei, nachdem der Übergabebefehl empfangen wurde, keine Hybrid Automatic Repeat Request (HARQ)-Übertragung in Reaktion auf das eine oder die mehreren von der Quellenzelle empfangenen Pakete an die Quellenzelle gesendet wird.

6. WTRU nach Anspruch 1, wobei der Übergabebefehl mindestens eine Bedingung enthält, wobei der Umstand, für das Senden der Verbindungsfreigabeanforderung an die mit der Quellenzelle verknüpfte Ressource eingerichtet zu sein, des Weiteren darauf basiert, dass die mindestens eine Bedingung erfüllt ist.

7. WTRU nach Anspruch 6, wobei die mindestens eine Bedingung eines oder mehrere von einer spezifizierten Zeitdauer, einer mit der Quellenzelle verknüpften spezifizierten Signalpegelschwelle und einer mit der Zielzelle verknüpften spezifizierten Signalpegelschwelle ist.

8. WTRU nach Anspruch 1, wobei der Umstand, zum Bestimmen eingerichtet zu sein, dass keine Pakete fehlen, umfasst, dass der Prozessor dazu eingerichtet ist, auf der Grundlage mindestens eines der von der Quellenzelle empfangenen einen oder mehreren Pakete oder der von der Zielzelle empfangenen einen oder mehreren Pakete zu bestimmen, dass die empfangenen Pakete eine Bedingung einer ununterbrochenen Sequenznummernfolge erfüllen.

9. Verfahren, das durch eine Drahtlos-Sende- und -Empfangseinheit (Wireless Transmit/Receive Unit, WTRU) (102) durchgeführt wird, wobei die WTRU für einen Multicast-Rundsendedienst (Multicast Broadcast Service, MBS) eingerichtet wurde, wobei der Umstand, für den MBS eingerichtet zu sein, umfasst, mit mindestens einem aktiven Multicast-Funkträger (Multicast Radio Bearer, MRB) eingerichtet zu sein;
wobei das Verfahren umfasst:
Empfangen eines Übergabebefehls;
Senden einer Verbindungsanforderung an eine Zielzelle (B);
Empfangen eines oder mehrerer Pakete von der Zielzelle;
Empfangen eines oder mehrerer Pakete von einer Quellenzelle (A), wobei das eine oder die mehreren Pakete von der Quellenzelle nach der Verbindung mit der Zielzelle von der Quellenzelle empfangen werden;
Bestimmen, auf der Grundlage mindestens eines der von der Quellenzelle empfangenen einen oder mehreren Pakete oder der von der Zielzelle empfangenen einen oder mehreren Pakete, dass keine Pakete fehlen;
Senden, mindestens auf der Grundlage der Bestimmung, dass keine Pakete fehlen, einer Verbindungsfreigabeanforderung an eine mit der Quellenzelle verknüpfte Ressource,
wobei sich das eine oder die mehreren Pakete auf den MBS beziehen.

10. Verfahren nach Anspruch 9, wobei das Empfangen des einen oder der mehreren Pakete von der Quellenzelle umfasst, dazu eingerichtet zu sein, die mit der Quellenzelle verknüpfte Ressource zum Empfangen des einen oder der mehreren Pakete von der Quellenzelle zu verwenden.

11. Verfahren nach Anspruch 9, wobei das Bestimmen, dass keine Pakete fehlen, das Bestimmen umfasst, dass es keine Sequenznummernlücke gibt, und wobei die Sequenznummernlücke eine Lücke zwischen Sequenznummern empfangener Pakete ist.

12. WTRU nach Anspruch 1 oder Verfahren nach Anspruch 9, wobei der Übergabebefehl unter Verwendung einer Radio Ressource Control (RRC)-Nachricht empfangen wird.

13. Verfahren nach Anspruch 9, wobei die mit der Quellenzelle verknüpfte Ressource eine mit der Quellenzelle verknüpfte temporäre Gruppen-Funknetzkennung (Group Radio Network Temporary Identifier, G-RNTI) ist, und wobei, nachdem der Übergabebefehl empfangen wurde, keine Hybrid Automatic Repeat Request (HARQ)-Übertragung in Reaktion auf das eine oder die mehreren von der Quellenzelle empfangenen Pakete an die Quellenzelle gesendet wird.

14. Verfahren nach Anspruch 9, wobei der Übergabebefehl mindestens eine Bedingung enthält, wobei der Umstand, für das Senden der Verbindungsfreigabeanforderung an die mit der Quellenzelle verknüpfte Ressource eingerichtet zu sein, des Weiteren darauf basiert, dass die mindestens eine Bedingung erfüllt ist, wobei die mindestens eine Bedingung eines oder mehrere von einer spezifizierten Zeitdauer, einer mit der Quellenzelle verknüpften spezifizierten Signalpegelschwelle und einer mit der Zielzelle verknüpften spezifizierten Signalpegelschwelle ist.

15. Verfahren nach Anspruch 9, wobei das Bestimmen, dass keine Pakete fehlen, umfasst, auf der Grundlage mindestens eines der von der Quellenzelle empfangenen einen oder mehreren Pakete oder der von der Zielzelle empfangenen einen oder mehreren Pakete zu bestimmen, dass die empfangenen Pakete eine Bedingung einer ununterbrochenen Sequenznummernfolge erfüllen.

## Revendications

1. Unité émettrice-réceptrice sans fil, WTRU, (102), dans laquelle :
la WTRU a été configurée pour un service multicast broadcast, MBS, dans laquelle la configuration pour le MBS comprend la configuration avec au moins un support radio multicast, MRB, actif ;
la WTRU comprenant un processeur (118) configuré pour :
recevoir une commande de transfert intercellulaire ;
envoyer une demande de connexion à une cellule cible (B) ;
recevoir un ou plusieurs paquets depuis la cellule cible ;
recevoir un ou plusieurs paquets depuis une cellule source (A), dans laquelle les un ou plusieurs paquets provenant de la cellule source sont reçus depuis la cellule source après la connexion à la cellule cible ;
déterminer, sur la base d'au moins un des un ou plusieurs paquets reçus depuis la cellule source et des un ou plusieurs paquets reçus depuis la cellule cible, qu'il n'y a pas de paquets manquants ; et
envoyer, sur la base au moins de la détermination qu'il n'y a pas de paquets manquants, une demande de libération de connexion à une ressource associée à la cellule source,
dans laquelle les un ou plusieurs paquets sont liés au MBS.

2. WTRU selon la revendication 1, dans laquelle la configuration pour recevoir les un ou plusieurs paquets depuis la cellule source comprend la configuration du processeur pour utiliser la ressource associée à la cellule source pour recevoir les un ou plusieurs paquets depuis la cellule source.

3. WTRU selon la revendication 1, dans laquelle la configuration pour déterminer qu'il n'y a pas de paquets manquants comprend la configuration du processeur pour déterminer qu'il n'y a pas d'espace de numéro de séquence, et dans laquelle l'espace de numéro de séquence est un espace entre des numéros de séquence de paquets reçus.

4. WTRU selon la revendication 1, dans laquelle la ressource associée à la cellule source est un identifiant temporaire de réseau radio de groupe, G-RNTI, associé à la cellule source.

5. WTRU selon la revendication 1, dans laquelle, après la réception de la commande de transfert intercellulaire, une transmission de demande de répétition automatique hybride, HARQ, n'est pas envoyée à la cellule source en réponse aux un ou plusieurs paquets reçus depuis la cellule source.

6. WTRU selon la revendication 1, dans laquelle la commande de transfert intercellulaire inclut au moins une condition, dans laquelle la configuration pour envoyer la demande de libération de connexion à la ressource associée à la cellule source est en outre basée sur la satisfaction de l'au moins une condition.

7. WTRU selon la revendication 6, dans laquelle l'au moins une condition est un ou plusieurs parmi une durée spécifiée, un seuil de niveau de signal spécifié associé à la cellule source et un seuil de niveau de signal spécifié associé à la cellule cible.

8. WTRU selon la revendication 1, dans laquelle la configuration pour déterminer qu'il n'y a pas de paquets manquants comprend la configuration du processeur pour déterminer, sur la base d'au moins un des un ou plusieurs paquets reçus depuis la cellule source et des un ou plusieurs paquets reçus depuis la cellule cible, que les paquets reçus satisfont une condition de numéro de séquence continue.

9. Procédé réalisé par une unité émettrice-réceptrice sans fil, WTRU, (102), dans lequel :
la WTRU a été configurée pour un service multicast broadcast, MBS, dans lequel la configuration pour le MBS comprend la configuration avec au moins un support radio multicast, MRB, actif ;
le procédé comprenant :
la réception d'une commande de transfert intercellulaire ;
l'envoi d'une demande de connexion à une cellule cible (B) ;
la réception d'un ou plusieurs paquets depuis la cellule cible ;
la réception d'un ou plusieurs paquets depuis une cellule source (A), dans lequel les un ou plusieurs paquets provenant de la cellule source sont reçus depuis la cellule source après la connexion à la cellule cible ;
la détermination, sur la base d'au moins un des un ou plusieurs paquets reçus depuis la cellule source et des un ou plusieurs paquets reçus depuis la cellule cible, qu'il n'y a pas de paquets manquants ; et
l'envoi, sur la base au moins de la détermination qu'il n'y a pas de paquets manquants, d'une demande de libération de connexion à une ressource associée à la cellule source,
dans lequel les un ou plusieurs paquets sont liés au MBS.

10. Procédé selon la revendication 9, dans lequel la réception des un ou plusieurs paquets depuis la cellule source comprend la configuration pour utiliser la ressource associée à la cellule source pour recevoir les un ou plusieurs paquets depuis la cellule source.

11. Procédé selon la revendication 9, dans lequel la détermination qu'il n'y a pas de paquets manquants comprend la détermination qu'il n'y a pas d'espace de numéro de séquence, et dans lequel l'espace de numéro de séquence est un espace entre des numéros de séquence de paquets reçus.

12. WTRU selon la revendication 1 ou procédé selon la revendication 9, dans lequel la commande de transfert intercellulaire est reçue à l'aide d'un message de commande de ressources radio, RRC.

13. Procédé selon la revendication 9, dans lequel la ressource associée à la cellule source est un identifiant temporaire de réseau radio de groupe, G-RNTI, associé à la cellule source, et dans lequel, après la réception de la commande de transfert intercellulaire, une transmission de demande de répétition automatique hybride, HARQ, n'est pas envoyée à la cellule source en réponse aux un ou plusieurs paquets reçus depuis la cellule source.

14. Procédé selon la revendication 9, dans lequel la commande de transfert intercellulaire inclut au moins une condition, dans lequel la configuration pour envoyer la demande de libération de connexion à la ressource associée à la cellule source est en outre basée sur la satisfaction de l'au moins une condition, dans lequel l'au moins une condition est un ou plusieurs parmi une durée spécifiée, un seuil de niveau de signal spécifié associé à la cellule source et un seuil de niveau de signal spécifié associé à la cellule cible.

15. Procédé selon la revendication 9, dans lequel la détermination qu'il n'y a pas de paquets manquants comprend la détermination, sur la base d'au moins un des un ou plusieurs paquets reçus depuis la cellule source et des un ou plusieurs paquets reçus depuis la cellule cible, que les paquets reçus satisfont une condition de numéro de séquence continue.
